# EUROPEAN PATENT SPECIFICATION

(11) **EP 2 724 480 B1**
(45) Date of publication and mention of the grant of the patent: **19.08.2015**
(21) Application number: 12735967.7
(22) Date of filing: 21.06.2012
(51) Int. Cl.: H04B 7/04, H04W 52/36, H04W 52/42, H04B 7/06, H04W 52/02

(54) **SELECTING UPLINK MULTI-ANTENNA TRANSMISSION TO ENHANCE COVERAGE**
AUSWAHL VON MEHRANTENNEN-AUFWÄRTSÜBERTRAGUNGEN ZUR VERBESSERUNG EINER ABDECKUNG
SÉLECTION DE L'ÉMISSION MONTANTE À ANTENNES MULTIPLES POUR AMÉLIORER LA COUVERTURE

(30) Priority: 21.06.2011 US 201161499463 P
(43) Date of publication of application: 30.04.2014
(73) Proprietor: Telefonaktiebolaget L M Ericsson (publ), 164 83 Stockholm (SE)
(72) Inventor: KAZMI, Muhammad, S-167 39 Bromma (SE); SESIA, Stefania, F-06330 Roquefort Les Pins (FR)
(74) Representative: Ericsson
(86) International application number: PCT/SE2012/050699
(87) International publication number: WO 2012/177218

(56) References cited:
- EP-A1- 2 259 654
- WO-A1-2009/050538
- WO-A2-2005/084379
- WO-A2-2008/003087
- US-A1- 2006 135 079
- US-A1- 2006 222 122
- US-A1- 2008 151 798
- US-A1- 2009 238 249
- QUALCOMM: "PA Backoff in power headroom reporting", 3GPP DRAFT; R2-050453 PA BACK-OFF HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Scottsdale, USA; 20050211, 11 February 2005 (2005-02-11), XP050127706, [retrieved on 2005-02-11]

## Description

### TECHNICAL FIELD

The present invention generally relates to wireless communications networks, and more particularly relates to techniques for controlling activation of uplink multi-antenna operation in a user device.

### BACKGROUND

Multiple-input multiple-output (MIMO) technologies are a range of advanced antenna techniques used to improve the spectral efficiency and thereby boost the overall system capacity. MIMO implies that both the base station and the UE ("user equipment" - 3GPP terminology for an end user's wireless device, mobile terminal, mobile station, etc.) employ multiple antennas, although the term is sometimes used in a manner that includes scenarios in which only one end of the radio link uses multiple antennas. MIMO techniques are widely studied and applied in practice for downlink communications, i.e., from the base station to the mobile terminal, and are increasingly under consideration for uplink communications as well, i.e., from the mobile terminal to the base station.

There exist a variety of MIMO techniques or modes, including Per Antenna Rate Control (PARC), selective PARC (S-PARC), transmit diversity, receiver diversity, Double Transmit Antenna Array (D-TxAA), etc. The last of these, D-TxAA, is an advanced version of transmit diversity, which is already used in the Wideband-CDMA (WCDMA) networks developed by members of the 3rd-Generation Partnership Project (3GPP).

Irrespective of the particular MIMO technique under discussion, the notation (M x N) is generally used to represent MIMO configuration in terms of the number of transmit (M) and receive antennas (N). Common MIMO configurations used or currently discussed for various technologies are: (2 x 1), (1 x 2), (2 x 2), (4 x 2), (8 x 2) and (8 x 4). The configurations represented by (2 x 1) and (1 x 2) are special cases of MIMO, corresponding to techniques known as transmit diversity and receiver diversity, respectively. The configuration (2 x 2) will be used in systems that support Release 7 of the 3GPP's specifications for WCDMA. In particular, WCDMA FDD release 7 will support double transmit antenna array (D-TxAA) in the downlink, which is a multiple-input multiple-output (MIMO) technique to enhance system capacity. (See 3GPP TS 25.214, "Physical Layer Procedures (FDD)".)

The E-UTRAN ("Evolved Universal Terrestrial Radio Access Network," the air interface of 3GPP's Long Term Evolution (LTE) upgrade path for mobile networks, will support several MIMO schemes, including single-user MIMO (SU-MIMO), in which several spatially multiplexed transmission layers are targeted to or received from a single user terminal, and multi-user MIMO (MU-MIMO), in which each of several spatially multiplexed downlink layers are targeted to different user terminals.

MIMO technology has also been widely adopted in other wireless communication standards, such as the IEEE802.16 standards for wireless broadband communications, often referred to as "WiMAX."

The above-mentioned MIMO modes or other MIMO techniques enable spatial processing of the transmitted and received signals. In general, the spatial diversity provided by these techniques can be used to improve spectral efficiency, extend cell coverage, enhance user data rate, mitigate multi-user interference, etc. However, in practice each MIMO technique provides its own benefits. For instance, receiver diversity (1 x 2) particularly improves signal coverage. On the other hand (2 x 2) MIMO, such as D-TxAA, leads to increased peak user bit rate.

Ideally, a 2x2 MIMO scheme may double the data rate. Whether the data rate can actually be doubled in practice depends on whether the spatial channels between the transmitter and receiver are sufficiently uncorrelated, so that the rank of the 2x2 MIMO channel matrix is two. (The rank is the number of independent rows or columns of the matrix.) In general, the average data rate will be lower than two times the data rate achieved in single link conditions.

So far, MIMO techniques have generally been used only for downlink transmission (i.e., from base stations to mobile terminals), and have not been widely employed for uplink communications. The reason is that MIMO techniques may involve higher levels of complexity both in the transmitter and in the receiver, compared to single-input, single-output (SISO) type of transmissions. In the radio-frequency (RF) portion of a mobile terminal, for example, several power amplifiers may be needed for the transmitter, depending on the MIMO scheme and on the number transmit antennas. In the receiver, multiple antennas are necessary, and multiple RF chains may be needed, depending on the MIMO schemes. Moreover, each MIMO scheme introduces an additional complexity in the baseband processing.

Accordingly, improved techniques are needed for implementing and controlling MIMO operation for uplink communications.

WO 2008/003087 discloses systems and methodologies for switching between various combinations of MIMO, Single-Input Multiple-Output (SIMO), SISO and Orthogonal Frequency Division Multiplexing (OFDM), Localized Frequency Division Multiplexing (LFDM) and Interleaved Frequency Domain Multiplexing (IFDM). According to various aspects, a method for a wireless communication network is provided that includes: receiving a first set of data information, the first set of information comprising a first value, determining if the first value is above a threshold, and transmitting an indication to switch to using a first transmission technique if determined that the first value is above the threshold.

### SUMMARY

Under certain higher-speed conditions, uplink transmit diversity (ULTD) can show worse performance than conventional single-antenna operation. Therefore, a higher-layer signaling mechanism to deactivate the ULTD feature is recommended to be used under certain radio conditions, for instance when the UE's speed is high.

Recently, several advanced features such as multi-carrier have been introduced. Each of these features is also associated with so-called maximum power reduction by the UE, a feature that permits the UE to reduce its maximum output power to accommodate requirements limiting spurious emissions, radio-frequency exposure, etc. In some cases, the UE's maximum power reduction can be very large, e.g., between 3-6 dB. However, previous approaches to activating ULTD do not take into account the UE's maximum power reduction when the UE operates using one or more such advanced features, which may require large UE maximum power reduction. This means that these other features, such as multi-carrier, multi-RAT/multi-mode transmission, etc., may not be exploited to their fullest potential when ULTD is used in conjunction with them.

Several embodiments of the techniques described herein address these problems. These embodiments include, for example, methods that comprise evaluating operating conditions for a UE transmitter and, based on the operating conditions, selectively activating or deactivating multiple-antenna transmission by the UE. The operating conditions that are evaluated include, in some embodiments, the applicability of power backoff (maximum power reduction, or "MPR") in the UE, including whether Additional MPR (A-MPR) or power management MPR (P-MPR) are applicable. Other operating conditions that are evaluated, in some embodiments, are uplink data rate requirements or limitations for the UE, and/or the actual or estimated status of the battery in the UE.

One or more of these techniques may be implemented in a network node (other than the UE), based on the network node's knowledge of the operating conditions applicable to the UE or based on information reported to the network node by the UE, or both. In other embodiments, these methods may be implemented in the UE (i.e., in an autonomous mode of operation). In the first case, some embodiments further include a signaling step, in which the UE is directed to activate or de-activate multiple-antenna transmission. In the latter case, some embodiments include a signaling step in which the UE informs the network of its activation or deactivation of multiple-antenna transmission.

Mobile terminal apparatus and base station or other network node apparatus adapted to carry out any of the techniques summarized above, and variants thereof, are also disclosed in the detailed discussion that follows. Of course, the present invention is not limited to the above-summarized features and advantages. Indeed, those skilled in the art will recognize additional features and advantages upon reading the following detailed description, and upon viewing the accompanying drawings.

Even though embodiments have been summarized above, the claimed embodiments are defined by the accompanying claims 1-14.

### BRIEF DESCRIPTION OF THE DRAWINGS

Figure 1 illustrates power consumption for a mobile terminal as a function of scheduling grant/data rate, for uplink transmission with and without closed-loop transmit diversity.
Figure 2 illustrates power consumption of an example power amplifier as a function of output power.
Figures 3 and 4 illustrate example scenarios for co-located carriers in a wireless communication system.
Figure 5 is a plot of received signal power versus downlink range.
Figures 6 and 7 are process flow diagrams illustrating example methods for controlling activation of uplink multi-antenna operation.
Figure 8 is a block diagram illustrating an example apparatus configured according to some embodiments of the present invention.

### DETAILED DESCRIPTION

Note that although terminology from 3GPP LTE and/or 3GPP W-CDMA is used in this disclosure to exemplify the invention, this should not be seen as limiting the scope of the invention to only these systems. Other wireless systems, including WiMax, UMB, GSM, etc., may also benefit from exploiting the ideas covered within this disclosure. More particularly, the techniques and apparatus described herein are generally applicable to UEs and to network nodes supporting any type of RAT (LTE, HSPA, GSM, CDMA2000, HRPD, Wimax, etc.) or supporting technology that comprises a mixture of RATs (e.g., multi-standard radio (MSR)). The techniques are also applicable to UEs and network nodes that support carrier aggregation or multi-carrier operation, or multi-carrier/multi-RAT operation, with multiple-transmit-antenna operation (e.g., beamforming, MIMO, transmit diversity, etc.).

As noted above, MIMO techniques have primarily been used for downlink transmission, and have not been widely employed for uplink communications. MIMO techniques involve higher levels of complexity both in the transmitter and in the receiver, compared to single-input, single-output (SISO) type of transmissions. In the radio-frequency (RF) portion of the transmitter, several power amplifiers (PAs) may be needed, depending on the MIMO scheme and on the number of transmit antennas. In the receiver, multiple antennas are necessary, and multiple RF chains may be needed, depending on the MIMO schemes. Moreover, each MIMO scheme introduces additional complexity to the baseband processing.

Multiple PAs are generally considered feasible in the base station because the base station has fewer constrains on form factor and battery life. However, if MIMO is to be used in uplink transmission, care should be taken in the design of (possibly multiple) PAs for the user terminal (referred to as "user equipment" or "UE" in 3GPP specifications). Designers must especially be concerned with battery life. The use of MIMO in the uplink will have an impact on battery life, form factor and complexity for user equipment, hence it is important to exploit these techniques to the fullest extent possible.

As in the downlink, several different multi-antenna techniques can be applied in the uplink, such as beamforming or antenna switching. Depending on whether the receiving base station (such as an LTE eNodeB) is equipped with multiple receiving antennas, possible multi-antenna schemes include transmit diversity (two transmit antennas, one receiving antenna) or Uplink-MIMO (2X2). Moreover, the scheme can be open-loop or closed-loop. Open-loop multi-antenna techniques are based on an assumption that the UE does not have information about the uplink channel, hence it cannot exploit this knowledge in order to optimize the transmission weights (the transmission beamforming) in order to steer the beam in the direction of the base station. On the other hand, in closed-loop multi-antenna techniques the UE has some information about the uplink channel, which can be exploited to optimize the beamforming vector.

3GPP has recently started work on standards for uplink transmit diversity, for Release 11 UTRA systems, and on uplink MIMO, for Release 11 E-UTRA systems. "UTRA," or "Universal Terrestrial Radio Access," is the generic term for the radio technology employed in 3GPP systems based on W-CDMA. "E-UTRA," or "Evolved Universal Terrestrial Radio Access," is the generic term for the radio technology employed in 3GPP systems based on Orthogonal Frequency Division Multiple Access, and is often referred to as "Long-Term Evolution" or LTE. In the future, the extension of the transmit diversity scheme to more advanced uplink MIMO schemes will be defined for UTRA as well.

In particular, under open-loop transmit diversity for UTRA, the UE can use a switching mechanism in order to alternatively select the antenna that is used for the transmission, or it can use a beamforming approach, where the beamforming is randomly selected according to a predefined set. In closed-loop methods, the UE could select the best antenna to transmit from, or select the best beamforming vector based on acquired knowledge (feedback) about the channel between the UE and the receiving base station.

It has been recently decided that, under closed-loop uplink transmit diversity, it is the responsibility of the base station (a "NodeB" in 3GPP terminology) to indicate to the UE which of several precoding vector to use in order to optimize its performance. For uplink transmission in UTRA, the precoding vector is a vector of phases only. This approach does not exploit the possible degrees-of-freedom linked to the amplitudes of the precoding vector elements.

It has been shown that, theoretically, closed-loop uplink transmit diversity provides a benefit in terms of throughput. In the case of open-loop transmit diversity, the benefit depends more on the channel conditions and on the algorithm chosen by the mobile terminal, and the gains may be lower than those achieved with closed-loop transmit diversity. Nevertheless, it can be shown that under particular conditions it is beneficial to use open-loop transmit diversity.

It should be taken into account that MIMO transmission also involves complexity, e.g., in terms of computational requirements on the signal processing circuits, and consumes more UE battery power. Therefore, MIMO is most practically feasible for data transmissions, rather than voice, and most preferably for high data-rate transmissions.

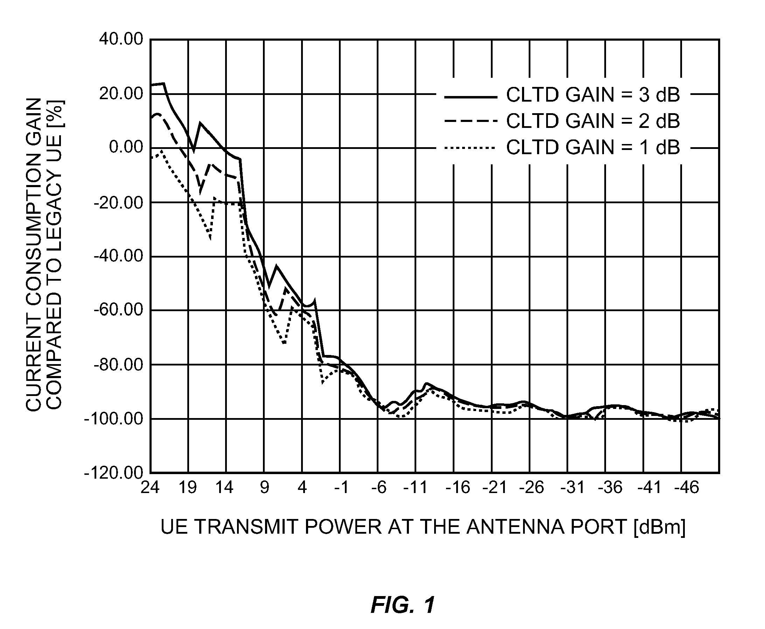

As an example, Figure 1 shows the benefits in terms of UE current consumption versus output power for a transmission with and without closed-loop transmit diversity (CLTD), for several different CLTD gains. The figure illustrates current consumption resulting from the use of two power amplifiers in CLTD mode, for gains of 0 to 3 dB, versus the use of a single power amplifier. At high transmit power levels (e.g., +24 dBm), the total current consumption is improved, i.e., reduced, by as much as 20%. However, it can be seen that the UE current consumption in CLTD mode is considerably increased, relative to a conventional single-PA transmission, in the mid to low output power range.

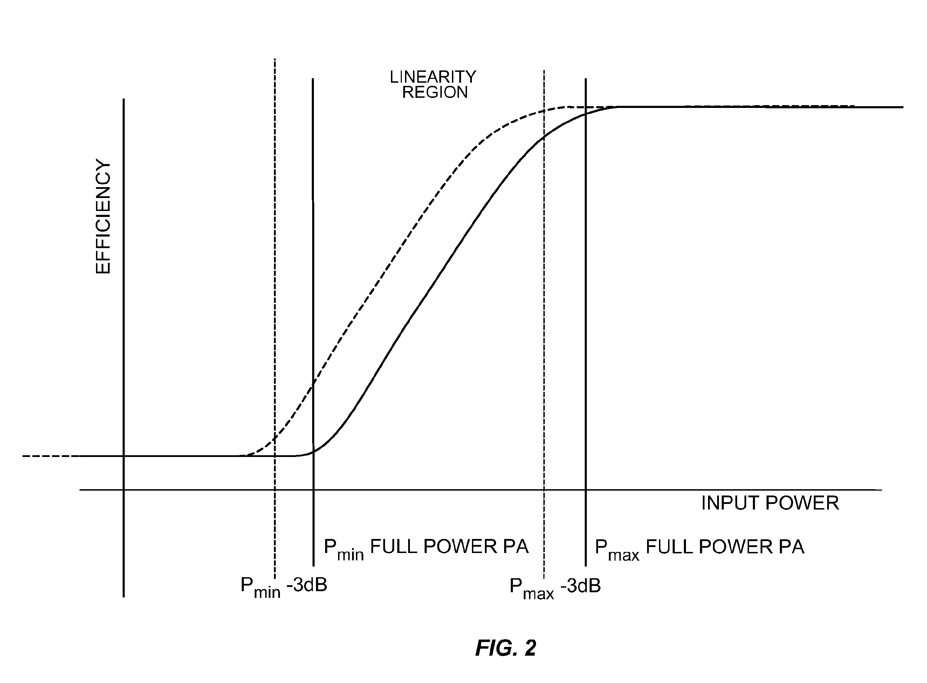

The behavior in Figure 1 can be explained by considering that PAs have non-linear transfer characteristics, as shown in Figure 2. Figure 2 in particular shows the efficiency of a full-power PA (lower curve) and the possible efficiency of a half-power PA (upper curve). A full-power PA is designed to deliver the mobile terminal's nominal maximum output power by itself, while a half-power PA is designed to deliver only one-half of the mobile terminal's nominal maximum output power. These two PA types are considered in the figure because it is still under discussion in 3GPP which PA type to consider as reference architecture. Depending on the PA type, the value of the threshold at which CLTD becomes efficient may vary. For both the PA types it can be seen that at relatively low transmit power there is a "floor" effect, which means that the PA efficiency is very low. Note that the efficiency of the PA is a measure of how much of the power source is usefully applied to the amplifier's output. In other words, the variation in the input signal to the PA does not cause any variation in the output signal from the PA. This makes CLTD or any scheme working with multiple antennas and multiple PAs inefficient at low transmit power. Therefore, an uplink transmit diversity scheme or any scheme using multiple antennas should be switched on when it actually gives benefits for both the UE and the network. This means that the uplink transmit diversity scheme or any scheme using multiple antennas should be switched on only when the output power of the radio transmitter of the UE is higher than a threshold or at least moderately higher, e.g., -10 dBm or above.

The techniques described in detail below address the problem of network optimization through the selective activation and deactivation of uplink transmit-diversity or other multi-antenna features.

### UE and Base Station MIMO Capabilities

MIMO is generally a "UE capability," as that term is used in the 3GPP specifications, which means that all UEs may not support it. MIMO operation can lead to significantly better performance compared to the baseline scenario (single transmit and receive antenna). However, MIMO involves additional UE complexity, thus some UEs (e.g., low-end UEs) don't support MIMO capability.

A UE supporting one or more MIMO capabilities informs its capabilities to the network at the time of call setup or during registration process. Certain technology may support more than one MIMO mode. This means that in one scenario, a particular base station may support all possible MIMO modes allowed by the corresponding standard. In another scenario the base station may offer only a sub-set of MIMO modes. In a basic arrangement, the base station may not offer any MIMO operation at all, i.e., it supports only transmissions from a single transmit antenna. Therefore, the actual use of a particular MIMO technique is possible only in scenarios where both the serving base station and UE bear the same MIMO capability.

Beginning with Release 8 of the 3GPP standards, several new UE capabilities have been introduced in 3GPP. One important feature is support for multi-carrier High-Speed Downlink Packet Access (HSDPA), where the UE is capable of receiving an HSDPA signal on each of two or more carriers at the same time. Multi-carrier HSDPA can be also deployed with MIMO on each carrier, to further enhance the data rate. The techniques disclosed herein are applicable as well to multi-carrier capable UEs. The following section provides some details on multi-carrier deployment.

### Multi-Carrier Deployment

To enhance peak-rates within a technology, multi-carrier or carrier aggregation solutions are known. For example, it is possible to use multiple 5-MHz carriers in High-Speed Packet Access (HSPA) to enhance the peak rate within the HSPA network. In addition, Release 10 of the LTE specifications will facilitate the aggregation of multiple LTE carriers.

In LTE, each carrier in multi-carrier or carrier aggregation system is generally termed a component carrier (CC), but is sometimes also referred to as a cell. In simple terms, the term component carrier refers to an individual carrier in a multi-carrier system. Carrier aggregation (CA) technology is also referred to in other contexts by terms such as "multi-carrier system", "multi-cell operation", "multi-carrier operation", "multi-carrier" transmission and/or reception. Any of these means that CA is used for transmission of signaling and data in the uplink and/or downlink directions.

In a carrier aggregation system, one of the component carriers is the primary carrier, or "anchor" carrier, while the remaining ones are called secondary or supplementary carriers. Generally, the primary or anchor component carrier carries the essential UE-specific signaling. The primary component carrier exists in both uplink and direction CA. The network may assign different primary carriers to different UEs operating in the same sector or cell.

The component carriers in a carrier aggregation system may belong to the same frequency band, in which case the technique is referred to as intra-band CA, or to different frequency bands (inter-band CA), or any combination thereof (e.g., two component carriers in band A and one in band B). In the HSPA specifications, inter-band CA in which carriers are distributed over two bands is also referred to as dual-band-dual-carrier-HSDPA (DB-DC-HSDPA). Furthermore, the component carriers in intra-band CA may be adjacent or non-adjacent in the frequency domain. The latter case may be referred to as intra-band, non-adjacent CA, for example. A hybrid approach to CA, including both intra-band adjacent, intra-band non-adjacent, and inter-band component carriers is also possible.

In HSPA Release 10, up to four downlink (DL) carriers can be aggregated (this is known as 4C-HSDPA), where the DL carriers or DL cells may be belong to the same frequency band or split over two different frequency bands, e.g., three adjacent DL carriers in band I (2.1 GHz) and one DL carrier in band VIII (900 MHz). In Release 11 of the HSPA specifications, up to eight DL carriers may be aggregated (this may be termed as 8C-HSDPA); the DL carriers may be distributed over two or more bands. In the present version of the HSPA and LTE specifications (i.e., Release 10), all the carriers that belong to one frequency band must be adjacent when configured by higher layers, e.g., by Radio Resource Control (RRC) signaling. However, actual operation on non-adjacent carriers within the same band can result from the selective carrier activation/deactivation of carriers that is performed by the lower layers, e.g., by Medium Access Control (MAC) signaling. In future releases (e.g., Release 11), non-adjacent carriers within the same band may be configurable.

In LTE intra-band CA, in principle up to five DL carriers each of 20 MHz may be aggregated by the UE; at least the UE requirements exist for two DL carriers, i.e., up to 40 MHz. In LTE inter-band CA, two DL carriers belonging to two different bands can be aggregated by the UE.

Using carrier aggregation between carriers of different technologies is also referred to as "multi-RAT carrier aggregation" or "multi-RAT-multi-carrier system" or simply "inter-RAT carrier aggregation". For example, carriers from WCDMA and LTE may be aggregated. Another example is the aggregation of LTE and CDMA2000 carriers. For the sake of clarity, carrier aggregation within the same technology as described above may be regarded as 'intra-RAT' or simply "single-RAT" carrier aggregation.

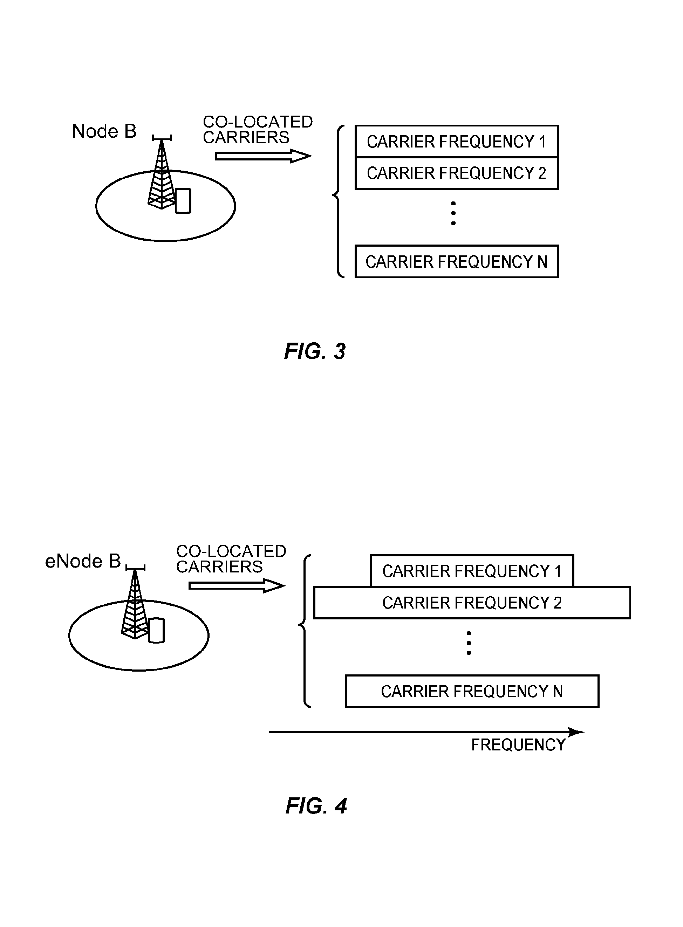

Figure 3 illustrates an example of multi-carrier deployment in a UTRAN system, where the component carriers correspond to multiple cells of 5 MHz each. Such cells are also referred to as "co-located cells" in this disclosure. These co-located cells are served by the same base station or Node B. Figure 4 shows an example of multi-carrier deployment in an E-UTRAN system. In this case, the carriers correspond to multiple cells having different bandwidths. Nevertheless, even in E-UTRAN the use of co-located cells having the same bandwidth is likely to be the most common deployment scenario.

### Performance of uplink transmit diversity

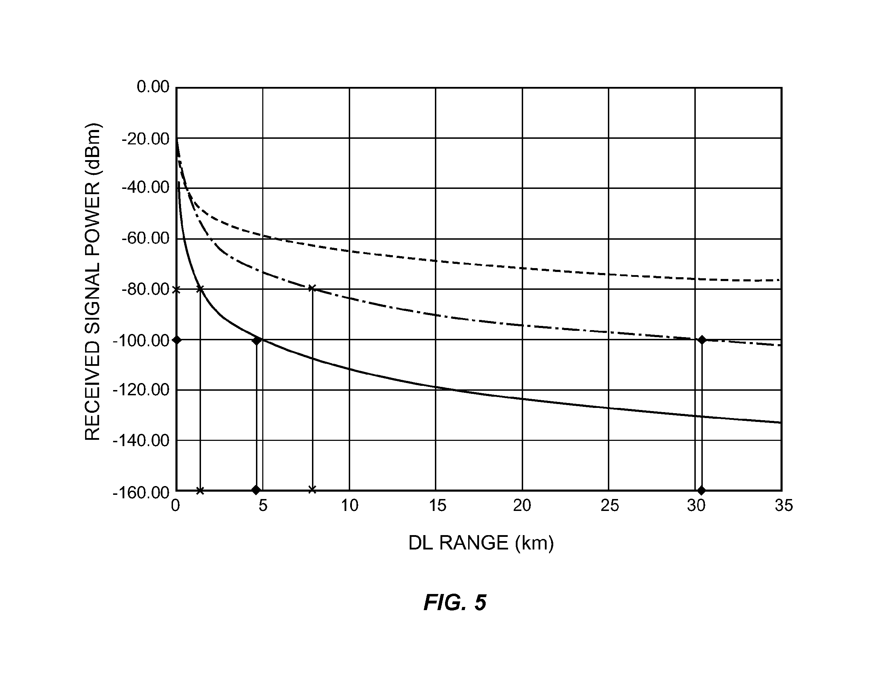

Uplink transmit-diversity (ULTD) provides benefits in terms of capacity versus signal-to-noise ratio (SNR). For example, Figure 5 shows the (downlink) received signal power as a function of downlink range in an LTE cell, assuming SIMO operation, a bandwidth of 5 MHz, a carrier frequency of 900 MHz, and a normal cyclic prefix. The downlink range can be a cell range, e.g., from the base station transmitter to the UE radio receiver, which can measure the signal transmitted by the base station. The top curve reflects a free-space propagation model, while the second curve depicts a rural model. The lowest curve illustrates the received signal strength as a function of downlink range assuming an urban propagation model. Superimposed on the graph are straight lines showing example minimum signal strengths required to reliably demodulate data transmitted using 64-QAM at a 3/4 coding rate and using QPSK at a 1/3 coding rate. It can be seen, for example, that a received signal power of -80 dBm is required to demodulate 64QAM, which means that the downlink range in an urban environment is less than 2 kilometers and is about 8 kilometers in the rural environment. Likewise, given that -100 dBm signal strength is required to demodulate QPSK transmissions in this system, then the downlink range in the urban and rural environments is about 4.5 and 31 kilometers, respectively. Note that this figure does not take into consideration the actual power consumption and battery life of the UE.

From Figure 5 it can be seen that transmit diversity is interesting for certain SNR regions, and for certain scenarios. In particular, note that the curve for the urban environment is sloping quite significantly in the region between -80 dBm and -100dBm. As a result, even small changes in the received signal power or the receiver's sensitivity can have large changes in the receiver's ability to reliably demodulate the signal. While Figure 5 illustrates a downlink scenario, it should be appreciated that the same considerations apply to the uplink. Thus, even small changes in output transmit power and/or reference receiver sensitivity can have dramatic impacts on the effective "size" of a cell.

In general, the transmit diversity feature is used in order to increase the throughput performance for a particular radio link. However, this feature can be also considered in order to reduce the transmit power needed in order to keep the same performance. Moreover, it can be highly beneficial to exploit this feature to avoid cell shortening in cases when a back-off of the transmit power is needed because of certain RF core requirements. (For additional discussion of these back-off requirements, see 3GPP TS 25.101 for UTRA and 3GPP TS 36.101 for E-UTRA.) Often, the UE is allowed to apply a transmit power reduction to limit the amount of interference it creates to its own receiver or to other receivers. It will be appreciated that this transmit power reduction results in an effective "shortening" of the cell, hence the system loses network capacity. Therefore it is important to exploit advanced features to avoid cell shortening, when possible. On the other hand, a tradeoff between cell-shortening avoidance and battery savings in the UE should be carefully considered.

In short, in order to exploit the benefits of this transmission mode, it is highly beneficial to switch on uplink transmit diversity only when a real benefit is detected, as explained in more detail below.

### Radio emissions

Although a wireless device typically operates in a well-defined portion of the frequency band, emissions outside its operating or channel bandwidth (BW) and also outside its operating frequency band are unavoidable. These emissions outside the channel BW or frequency band are often referred to as out-of-band (OOB) emissions or unwanted emissions. The emissions both inside and outside the channel BW and/or frequency band of operation are also exposures of the human body to RF energy. These two concepts (OOB emissions and RF exposure to humans) and their associated signaling aspects are described below.

First, UEs as well as base stations have to fulfill a specified set of out-of-band (OOB) emission requirements. The objective of these requirements is to limit the interference caused by the transmitters, outside their respective operating bandwidths, to the adjacent carriers or bands. In fact, all wireless communication standards (e.g., GSM, UTRAN, EUTRAN, WLAN, etc.), clearly specify OOB emission requirements to limit or at least minimize the unwanted emissions. Some of these emission limits are approved and set by the national and international regulatory bodies, e.g., ITU-R, FCC, ARIB, ETSI etc.

The major OOB emission requirements, which are typically specified by the standards bodies and eventually enforced by the regulators in different countries and regions, for both UEs and base stations, generally include requirements in each of the following categories: Adjacent Channel Leakage Ratio (ACLR); Spectrum Emission Mask (SEM); Spurious emissions; and in-band unwanted emissions. The specific definition and the specified level of these requirements can vary from one system to another. Typically, however, these requirements ensure that the emission levels outside an operating bandwidth, or band, in some cases, remain several tens of dB below the wanted signal in the operating bandwidth. Although OOB emission levels tend to decay dramatically further away from an operating band, they are not completely eliminated, at least in the adjacent carrier frequencies.

The UE and BS each have to meet the applicable OOB emission requirements irrespective of their transmission power levels. One way to improve OOB emissions is to operate the transmit power amplifier in a highly linear mode. However, for the UE, conservation of its battery power is very critical. This requires that the UE has an efficient power amplifier (PA). The PA is therefore typically designed to operate efficiently and with sufficient linearity at certain typical operating points or configurations or sets of parameter settings, e.g., modulation type, number of active physical channels (e.g., resource blocks in E-UTRA or number of CDMA channelization codes code /spreading factor in UTRA). In practice, however, the UE may operate using any combination of modulation, physical channels, etc. Therefore, in some UL transmission scenarios the UE power amplifier may not be able to operate in the linear zone, thereby causing OOB band emissions due to harmonics or other non-linear characteristics caused by non-linear amplification.

To ensure that a UE fulfills OOB requirements for all permitted UL transmission configurations, the UE is allowed to reduce its maximum uplink transmission power in some scenarios, when it reaches its maximum power. This is called maximum power reduction (MPR), or UE power back-off in some literature. For instance, a UE with a maximum transmit power of 24 dBm may reduce its maximum power from 24 dBm to 23 or 22 dBm, depending upon its configuration.

A base station may also have to perform MPR, but this is not standardized. Furthermore, the BS can generally afford to have a power amplifier with a larger operating range, since its efficiency is less critical compared to that of the UE.

The MPR values for different configurations are generally well specified in the standard. The UE uses these values to apply MPR when the conditions for the corresponding configurations are fulfilled. These MPR values are regarded as static in the sense that they are independent of resource block allocation and other deployment aspects.

In E-UTRA, an additional MPR (A-MPR) for the UE transmitter has also been specified, which is applied by the UE in addition to the normal MPR. The difference is that A-MPR is not fully static. Instead the A-MPR can vary between different cells, operating frequency bands and more specifically between cells deployed in different location areas or regions. In particular, the A-MPR is applied by the UE in order to meet the so-called additional spurious emission requirements imposed by a regional regulatory organization.

The A-MPR includes all the remaining UE maximum output power reduction (on top of the normal MPR) needed to account for factors such as: bandwidth, frequency band, resource block allocation, requirements set by regional regulatory bodies (FCC, ARIB, European regulation, etc.). To meet varying regulatory emission requirements, the A-MPR required can vary from one part of the network to another. This is due to factors such as the variable bandwidth, varying number of resource block allocation, different bands in different parts of the networks, etc. Further, even if the deployment scenario (in terms of bands used, bandwidth size, etc.) is homogeneous over a large coverage area, there will always be border regions between these coverage areas. Therefore, the A-MPR is a cell-specific value.

For these reasons, the A-MPR is signaled to the UE via system information, on a UE-specific channel or in a broadcast message. This allows the UE to acquire the A-MPR information when it camps on to a cell. The acquired A-MPR value which is associated with a cell is then used by the UE to reduce its maximum output power whenever it transmits in the uplink. A specific parameter called network signaling (NS) to enforce A-MPR to meet the additional spurious emission requirements has been specified in E-UTRA.

Another important factor in UE design is the human exposure to radio-frequency (RF) electromagnetic fields (EMF) that are created by the UE's transmissions. Important guidelines on RF exposure to humans have been produced by the International Commission on Non-Ionizing Radiation Protection (ICNIRP, 1998) and the Institute of Electrical and Electronics Engineers (IEEE, 1999). The limits in these recommendations are similar, and have been used as the basis for national standards and regulations in many countries. The ICNIRP guidelines, which are the most widely used recommendations, have been endorsed by the World Health Organization (WHO). These RF exposure guidelines are science-based and the prescribed limits have been set with substantial safety margins. These guidelines have been designed to provide protection from all established health effects from short-term and long-term exposure to RF fields, and the safety of children and other segments of the population have been taken into account.

The concept of Specific Absorption Rate (SAR) is introduced in these guidelines to measure the impact on the human body from the exposure of RF EMF transmitted by the UE. SAR is a measure of the maximum energy absorbed by a unit of mass of exposed tissue of a person using a mobile phone, over a given time, or more simply the power absorbed per unit mass. Advised by ICNIRP, the communication administration departments of different countries have issued SAR limits. For instance, the Federal Communications Commission (FCC) in the United States has determined that the SAR limit is 1.6 W/kg for cell phones. The SAR limit in Europe and in most other countries is 2 W/kg.

A UE should comply with the SAR requirements or any type requirements for limiting the RF exposure to human which are specified by the regulator in an individual country, region, province or state, etc. To meet these requirements, the UE may also have to reduce its maximum output power. Hence, the UE's maximum output power is limited by the SAR limit.

The term power management has been used to apply to techniques for controlling emissions to limit the SAR. The power-management MPR (P-MPR) is the amount of UE output power reduction applied to meet the RF exposure requirements. In previous techniques, one or more parameters associated with the MPR to be applied by the UE to meet the SAR or any type of RF exposure requirements are signaled to the UE. This means the P-MPR may also be signaled to the UE. This is due to the fact that SAR or RF exposure requirements may vary from one region to another. Hence the amount of the MPR required by the UE to meet the requirements may vary from one cell to another.

### Device-to-device communication

Device-to-device (D2D) communication means direct communication between two UEs. A D2D communication link can be established by the network (network-assisted D2D communications) or autonomously, by the UEs involved. In the former case, for example, the network can assist UEs that are proximate to one another to discover one another (device discovery) and to establish a direct link (D2D bearer establishment), rather than a link that passes through the network node, e.g., the base station or Radio Network Controller (RNC). When two UEs communicate with each other via a cellular radio network node, the communication path involves an uplink and a downlink, both consuming valuable system resources, as opposed to the single hop of a direct D2D link. In some cases, the same UE may simultaneously maintain a cellular communication link (e.g., with the serving base station) and a direct D2D link with another UE.

### Problems with Existing Solutions

It has been argued that under certain higher-speed conditions, uplink transmit diversity (ULTD) shows worse performance than conventional single-antenna operation. Therefore, a higher-layer signaling mechanism to deactivate the ULTD feature is recommended to be used under certain radio conditions, for instance when the UE's speed is high. (See 3GPP TR 25.863, "Universal Terrestrial Radio Access (UTRA); Uplink transmit diversity for High Speed Packet Access (HSPA)".)

Recently, several advanced features such as multi-carrier have been introduced. These features are also associated with the UE maximum power reduction. In some cases, the UE's maximum power reduction can be very large, e.g., between 3-6 dB. Previously known approaches to activating ULTD do not take into account the UE's maximum power reduction when the UE operates uses one or more such advanced features, which may require large UE maximum power reduction. This means that these approaches may not provide full gain when ULTD is used in conjunction with other features such as multi-carrier, multi-RAT/multi-mode transmission, etc.

### Controlling Activation of Uplink Multi-antenna Operation

Several embodiments of the techniques described herein address these problems. As detailed below, these embodiments include, for example, methods that comprise evaluating operating conditions for a UE transmitter and, based on the operating conditions, selectively activating or deactivating multiple-antenna transmission by the UE. The operating conditions that are evaluated include, in some embodiments, the applicability of maximum power reduction (MPR) in the UE, including whether AMPR or P-MPR are applicable. Other operating conditions that are evaluated, in some embodiments, are uplink data rate requirements or limitations for the UE, and/or the actual or estimated status of the battery in the UE.

One or more of these techniques may be implemented in a network node (other than the UE), based on the network node's knowledge of the operating conditions applicable to the UE or based on information reported to the network node by the UE, or both. In other embodiments, these methods may be implemented in the UE (i.e., in an autonomous mode of operation). In the first case, some embodiments further include a signaling step, in which the UE is directed to activate or de-activate multiple-antenna transmission. In the latter case, some embodiments include a signaling step in which the UE informs the network of its activation or deactivation of multiple-antenna transmission.

A general concept underlying several of the techniques disclosed herein is that a mechanism for the selective activation and deactivation of uplink transmit diversity (ULTD) or other multi-antenna technique is used to improve coverage in advanced UE operation scenarios, such as in multi-carrier operation. Several of these techniques fall into the following categories: methods and apparatus for network-controlled activation of ULTD, methods and apparatus for network-controlled deactivation of ULTD, methods and apparatus for UE autonomous activation of ULTD, and methods and apparatus for UE autonomous deactivation of ULTD. These categories are discussed in further detail below.

### Network-controlled activation of multiple-antenna transmission.

A network node such as a RNC or base station can be configured to control the activation of the ULTD feature by using higher layer signaling, in order to optimize the network capacity under certain scenarios or conditions that are associated with UE power backoff (also known as UE maximum power reduction, or UE MPR). In particular, in determining when to activate or deactivate ULTD for a given UE or UEs, the network node considers the conditions or scenarios under which the UEs are allowed to backoff or reduce its maximum transmission power and/or to relax UE requirements in terms of the required receiver reference sensitivity.

UE power backoff and reference sensitivity requirements are pre-defined for different operations, e.g., multi-carrier operation. Therefore, the pre-defined UE requirements for each of several operating scenarios and/or operating conditions can be evaluated by the network node, for use in determining when to perform activation/deactivation of the ULTD feature.

Several of these scenarios or conditions are described in the following. First are scenarios that involve UE maximum power reduction due to certain transmission parameters. As noted above, the Maximum Power Reduction (MPR) or UE power backoff can be several dBs, depending upon the transmission parameters and the uplink channel configurations. The purpose of MPR is to allow the UE, in some demanding configurations, to lower its maximum output power so that it can meet the general requirements on signal quality and Out-Of-Band (OOB) emissions. It should be noted that the MPR is an allowance; the UE is not required to actually use it.

In LTE the MPR is expressed as a maximum power reduction which is applicable for particular quantities of allocated resource blocks (N_{RB}) that are particularly demanding. The MPR also depends upon the modulation type. For example, for QPSK the maximum MPR is equal to 1dB, while for 16QAM the MPR is 1dB for small resource block (RB) allocations. The MPR goes up to 2dB for large RB allocations. This is shown in table 1, which is taken from 3GPP TS 36.101.

**Table 1: Maximum Power Reduction (MPR) for UE Power Class 3 (23 dBm)**

| **Modulation** | **Channel bandwidth / Transmission bandwidth (N_{RB})** | | | | | | **MPR (dB)** |
|---|---|---|---|---|---|---|---|
| | **1.4 MHz** | **3.0 MHz** | **5 MHz** | **10 MHz** | **15 MHz** | **20 MHz** | |
| QPSK | > 5 | > 4 | > 8 | > 12 | >16 | > 18 | ≤ 1 |
| 16 QAM | ≤ 5 | ≤ 4 | ≤ 8 | ≤ 12 | ≤ 16 | ≤ 18 | ≤ 1 |
| 16 QAM | > 5 | > 4 | > 8 | > 12 | >16 | > 18 | ≤ 2 |

It should be noted that the location of the RBs may also influence the amount of MPR needed by the UE.

In HSDPA, the MPR depends upon the cubic metric reached for the particular UE transmission. The cubic metric depends on the allocated codes, on the channels used for transmissions, the modulation and the power level used for each channel.

In LTE, an additional power reduction called Delta_TC is applied in certain circumstances. More particularly, the Delta_TC is a 1.5 dB reduction in the lower limit of the maximum output power range, applied when the signal is within 4 MHz of the channel edge.

If the MPR is above a pre-determined threshold, due to the specific uplink configuration, then a network node configured according to some embodiments of the present invention can activate the ULTD to circumvent or lower the UE power backoff. In general, this may be done under any UL transmit channel configuration (e.g., multi-code transmission, certain gain factors, etc.) that leads to a high cubic metric (or other measure of PA non-linearity or poor out-of-band emissions). The activation of ULTD feature under these circumstances can prevent uplink coverage loss.

Other scenarios in which multi-antenna transmission in the uplink may be selectively activated and deactivated include multi-carrier scenarios. In HSPA, special multi-carrier combinations can create additional insertion loss in the transmitter, due to the presence of additional devices such as diplexers. This increased loss in the transmitter circuits increases the power requested at the PA to achieve a targeted output power. (See 3GPP TS 25.101.) In turn, this can lead to UE maximum power reduction, causing uplink coverage loss.

Especially in uplink multi-carrier HSPA (e.g., DC-HSUPA) under certain configurations, the maximum output power (MOP) is reduced in order to avoid too much leakage into the UE's own receiver. This power back off in the uplink reduces the signal coverage. Ultimately, this issue may reduce interest in deployment of the feature itself. However, the high power backoff in case of MC-HSUPA (see, e.g., Section 6.2.2A in 3GPP TS 25.101) can be mitigated, at least, by selectively activating ULTD to avoid cell shortening.

Similarly, when the UE operates in multi-carrier mode in LTE, the UE maximum power reduction can be very substantial. The power reduction depends upon the uplink configurations (e.g., modulation type, number of resource blocks, number of carriers, bandwidth of each carrier, etc). The power reduction can be as high as 2-3 dB.

According to several embodiments of the present invention, a network node (e.g., base station) is configured to selectively activate the ULTD feature under this scenario (i.e., multi-carrier operation). As a special case, the network may also activate ULTD in the event that the UE power back in the multi-carrier exceeds a certain threshold (e.g., 2 dB or more). This approach is used when the UE power reduction is required due to uplink multi-carrier operation or downlink multi-carrier operation, or both.

Another set of scenarios in which multi-antenna transmission in the uplink may be selectively activated and deactivated include co-existence deployment scenarios. In LTE, an "additional MPR" (A-MPR) is used by the UE to meet additional spurious emission requirements that are associated with the co-existence deployment scenario. Hence, the A-MPR is a signaled parameter. Therefore, in LTE the base station (eNodeB) may inform the UE of the possibility of further lowering its maximum power by signaling an A-MPR parameter in case it is required in a certain deployment scenario.

More commonly, the need for A-MPR occurs with certain combinations of E-UTRA bands, channel bandwidths, and transmission bandwidths, for which the UE must meet additional (more stringent) requirements for spectrum emission mask and spurious emissions. The A-MPR is also used to lower emission towards other systems, e.g., towards a public safety network.

As with MPR, the A-MPR is an allowance, not a requirement, and it applies in addition to MPR. Regardless of whether the UE makes use of the allowed MPR and A-MPR, the additional requirements for spectrum emission mask and spurious emissions that are signaled by the network always apply. The reason for the complex set of conditions for the relaxation is the expected intermodulation products, which may fall into adjacent bands that have different levels of sensitivity (e.g., public safety bands). The A-MPR can very between 1 dB to more than 10 dB. The actual value depends upon a particular co-existence deployment scenario.

Another set of scenarios in which multi-antenna transmission in the uplink may be selectively activated and deactivated include scenarios involving simultaneous multi-mode/multi-RAT transmission. For instance, Power Management MPR (P-MPR) has recently been introduced in Release 10 for LTE. The P-MPR allows a UE to reduce its maximum output power when other constraints are present. In particular, multi-RAT terminals may have to limit the LTE transmission power if transmissions on another RAT are taking place simultaneously. Such power restrictions may arise, for example, from regulations on Specific Absorption Rate (SAR) of radio energy into a user's body or from out-of-band emission requirements that may be affected by the intermodulation products of the simultaneous radio transmissions. The P-MPR is not aggregated with MPR or A-MPR, since any reduction in a UE's maximum output power for the latter factors helps to satisfy the requirements that would have necessitated P-MPR.

When power management or backoff is applied in multi-mode terminals supporting, e.g., simultaneous voice and data on different RAT (LTE+CDMA), the power backoff can be as large as 6-7 dB. Transmit power saving by 1-3 dB with ULTD diversity will substantially improve the coverage or at least reduce the loss in coverage, compared to the single-transmit-antenna case.

Another scenario where the ULTD feature can be exploited is to optimize the efficiency of transmitted signal when the UE battery is low. In fact, this can be done whenever the UE battery is low, regardless of whether high data rate is achieved with transmit diversity or not in the current radio environment. Hence, if the UE has data to transmit, the network can limit the talk time by activating ULTD and allowing the UE to transmit all the data before the end of battery life. The UE battery life can be determined either based on received report from the UE or autonomously by the network, e.g., via length of activity. For example if the UE is active for a long time, the network node can deduce that the UE battery has become very low. Hence the network can activate the ULTD feature.

Finally, another scenario in which multi-antenna transmission in the uplink may be selectively activated and deactivated involves network-assisted device-to-device communication. When a UE simultaneously communicates with the cellular network node over a first wireless communication link and at the same time operates in a device-to-device (D2D) communication mode with another UE over a second wireless communication link, the first UE shares its output power between the two wireless communication links, i.e., the cellular and D2D links. This may lead to reduction of coverage on the first communication link or the second communication link, both. When the network node (e.g., BS, RNC, etc.) configures the UEs to establish D2D communication and also maintains a communication link with one of them, then the network node may activate the ULTD on the first communication link or on the second communication link, or both.

Under one or more scenarios described above, the reduced maximum power transmitted by the UE and/or the increased reference sensitivity level is equivalent to shortening the cell coverage. Similarly, a low UE battery condition may eventually lead to loss of connection without completing the ongoing session. More particularly, reduced UE output power shrinks uplink coverage, while an increase in the UE reference sensitivity level shrinks the downlink coverage.

In practice, when very few users in the cells operate in one or more of these transmission modes, a proper scheduling algorithm could avoid scheduling such users at the edge of the cell, thus maintaining similar coverage as in a legacy network. However, this problem may introduce significant shortening of cell coverage in the near future, when most of the HSDPA or LTE UEs will operate under one or more of these scenarios. In these cases, features such as multi-antenna transmission in uplink and/or downlink can be selectively switched on in order to avoid the cell capacity loss. For example, under MC-HSDPA transmission condition, the Maximum Output Power (MOP) is relaxed by a maximum of 1dB, i.e., MPR is 1 dB. In LTE the MPR can be much higher depending on the conditions. Figure 5 shows an example of the downlink coverage range for certain received signal power. It is clear that an increased UE reference sensitivity level (i.e., relaxed sensitivity) of even a few dB directly translates into a downlink cell range / coverage reduction.

As stated earlier, the UE power backoff and reference sensitivity requirements are predefined for different operations, e.g., multi-carrier operation. Therefore the pre-defined UE requirements can be used by the relevant network node (i.e., the network node that determines whether to turn on or off the multi-antenna mode) to decide whether the ULTD is activated or not. In practice, depending upon the UE's implementation and the prevailing operating conditions, the UE may apply a smaller power backoff compared to the pre-defined requirements. Hence, another possibility is that the network node uses the actual UE maximum power reduction applied and/or reference sensitivity exhibited by the UE under one or more of the scenarios described above.

Note that the techniques described above may also be used to control the selective activation of more than two antennas. In the event that the UE supports more than two uplink (UL) antennas for ULTD and is currently using fewer than the maximum number (e.g., N = 4) of transmit antennas (e.g., N-K, K =2), the network node may selectively activate additional number of antennas for ULTD under one or more of the above mentioned scenarios by using higher layer signaling. In this case the network node can also indicate to the UE which specific antennas are to be used for transmission by the UE.

### Network-controlled deactivation of multiple-antenna transmission.

The previous section described techniques in which a network node selectively activates multiple-antenna transmissions, based on an evaluation of the operating configuration for the UE. In a similar approach, a network node can decide to selectively switch off multiple-antenna transmission, to reduce power consumption. For example, this decision may be taken in the base station when the data rate requirements for the UE are low (e.g., when a low Grant is scheduled for the UE, see Figure 1) and/or at low UE transmit power.

Under low UE transmit power, the efficiency of transmit diversity is worse than single antenna transmission. This is because the activation of a second PA increases the residual transmitter power, which is not efficiently used. Hence, the benefits of using multiple-antenna transmissions are generally not visible under low output power.

In one aspect of the presently disclosed techniques, the network may deactivate ULTD without regard to the number of antennas supported by the UE. In another aspect, in the event that a UE supports more than two uplink antennas for ULTD and the UE is using two or more of these antennas, the network node may selectively reduce the number of antennas for ULTD (e.g., from 4 to 2 antennas) under one or more of the above mentioned scenarios. The network node may also indicate which antennas should be activated/deactivated.

### Signaling mechanism and network nodes involved in signaling.

The selective activation and deactivation of the ULTD under one or more of the above scenarios can be performed by the network node that controls and manages the radio resources. It can also be done by any node that has UE ULTD capability information, e.g., a radio network node, core network node, etc. Examples of a radio network node in which these techniques may be implemented are network controller, base station, relay node, donor relay node, etc. More specifically the radio network node can be an RNC or BS (aka Node B) in HSPA, an eNode B or relay or donor eNode B in LTE, etc.

The signaling used to activate or deactivate ULTD can be specific to a UE, or it can be broadcasted to all UEs or to all UEs operating under a specific scenario (e.g., all UEs operating in multi-carrier mode). Further, various means of signaling to activate or deactivate the ULTD can be used. Examples include RRC signaling, MAC signaling, and layer 1 signaling over physical channels (e.g., over HSSCCH in HSDPA or PDCCH in LTE).

### Autonomous activation of multiple-antenna transmission by the UE.

In some aspects of the present techniques, the UE can autonomously decide whether to activate or deactivate (if activated) multiple-antenna transmission under one or more of several conditions. One such condition is when the UE battery is low. In fact, in some aspects ULTD may be autonomously activated whenever UE battery is low, regardless of whether high data rate is achieved with transmit diversity or not in the current radio environment. Hence, if the UE has data to transmit, the network can limit the talk time by activating ULTD and allowing the UE to transmit all the data before the end of battery life.

Another scenario under which a UE can autonomously activate ULTD is when a first UE is operating in cellular mode (e.g., communicating with a network node such as a base station) over first wireless communication link and at the same time is operating in a device-to-device (D2D) communication mode with another UE, over a second wireless communication link. In this scenario, the first UE shares its output power between the two wireless communication links: cellular and D2D. Multiple-antenna transmission can be enabled to avoid shortening of cell coverage because of the reduced amount of available power for the first communication link and/or second communication link. Multiple-antenna transmission can be activated for transmission over the first communication link or the second communication link, or both, when both links are used, to improve coverage on one or both links.

Other scenarios suitable for autonomous activation of multi-antenna transmission include scenarios where the UE is simultaneously operating on two or more different radio-access technologies (RATs) and there is a UE power backoff on one or more RAT in order to limit the RF exposure to humans. For example, when UE operates on LTE and CDMA2000 with different power amplifiers, a large power backoff may be applied on LTE to limit RF exposure to the human body. The activation of ULTD on the LTE link in this case can ensure better coverage compared to the case when no ULTD is used.

In one scenario the autonomous operation to activate the ULTD is entirely taken by the UE without any pre-defined rule or network control. However, the UE may still indicate to the network, or more specifically to the serving network node (e.g., RNC, BS, relay, etc.), that it has activated the ULTD. The UE may additionally indicate the reason for activation, e.g., due to simultaneous multi-link transmissions, low UE battery power, etc.

In a related approach, the autonomous activation operation is also done by the UE but based on one or more pre-defined rule. For example it can be pre-defined that the UE is allowed to autonomously activate the ULTD in certain scenarios. Examples of pre-defined scenarios are simultaneous multi-link (cellular and D2D) transmissions, low UE battery power (such as below a predefined threshold), etc. In case of simultaneous multi-link (cellular and D2D) transmission scenarios, it may also be pre-defined whether the UE can activate the ULTD on specific communication link, e.g., either on the first link or second link or both links or any of the links.

It may also be pre-defined that the UE is allowed to autonomously activate only certain types of ULTD, e.g., either beamforming or antenna switched diversity, etc. It may further be predefined that the UE is allowed to autonomously activate only certain type of ULTD for certain scenarios, e.g., beamforming under simultaneous multi-link transmissions and antenna switched diversity when UE battery is below threshold etc.

The thresholds used for activating the ULTD can be pre-defined by standard or by hard-programming the UE, or can be configured by the network node (e.g., RNC or base station) by using signaling means. In some embodiments, the UE can be configured via higher layer signaling (e.g., at initial setup) with the conditions / scenarios (e.g., low battery power) under which the UE can autonomously activate the ULTD.

In the event that a UE supports more than two uplink antennas for ULTD and is currently using fewer than the maximum number (e.g., N = 4) of transmit antennas (e.g., N-K, K =2), the UE in some embodiments may be configured to activate additional antennas for ULTD under one or more of the above mentioned scenarios.

### Autonomous deactivation of multiple-antenna transmission by the UE.

In some aspects a UE can be configured to autonomously deactivate multiple-antenna transmission to improve power consumption. The determination can be based on the data rate and/or the UE's output power level, for example. For instance, when transmitting at a low uplink data rate and/or when operating at low output power, the UE can autonomously deactivate the multiple antenna transmission. Determining that a data rate is low enough to trigger the deactivation can be based on expected bit rate or average bit rate over a certain time period, or upon the size of the transport / data block to be used for transmission, or both. Under such a scenario (e.g., low data rate and/or low output power) the efficiency of transmit diversity is worse than for single-antenna-transmission. This is because the presence of the active second power amplifier increases the residual transmit power, which is not efficiently used. Hence, the benefits of using multiple-antenna transmissions are not significant in this scenario.

The configuration principles for autonomous deactivation of multi-antenna transmission by the UE are very similar to those used for the activation, as discussed above. In one scenario the autonomous deactivation operation is entirely taken by the UE without any pre-defined rule or network control. However the UE may still indicate to the network, or more specifically to the serving network node (e.g., RNC, BS, relay, etc.) that it has deactivated the ULTD. The UE may additionally indicate the reason for deactivation, e.g., due to low bit rate and/or data block size for transmission and/or low output power, etc.

Likewise, in some cases, the autonomous deactivation operation is also done by the UE but is based on a pre-defined rule or rules. For example it can be pre-defined that the UE is allowed to autonomously deactivate the ULTD in certain scenario, e.g., when the data rate is below a threshold or transmit power is below a threshold or the transport / data block size to be transmitted is smaller than a threshold, etc. The thresholds can be pre-defined or can be configured by the network node (e.g., RNC or base station). In some aspects the UE can be configured via higher layer signaling (e.g., at initial setup) with the conditions / scenarios (e.g., low output power) under which the UE can autonomously deactivate the ULTD.

It may also be pre-defined that the UE is allowed to autonomously deactivate only a certain type or types of ULTD, e.g., either beamforming or antenna-switched diversity, etc. It may further be pre-defined that the UE is allowed to autonomously deactivate only certain type of ULTD for certain scenarios, e.g., beamforming under low output power and antenna switched diversity when data rate is low or data block size is small etc. Furthermore, in one aspect of some exemplary embodiments of the invention, the UE may deactivate ULTD without regard to the number of antennas supported by the UE. In other exemplary embodiments, in the event that the UE supports more than two UL antennas for ULTD and the UE is using two or more antennas, the UE may reduce the number of antennas for ULTD (e.g., from four to two antennas) under one or more of the above mentioned scenarios.

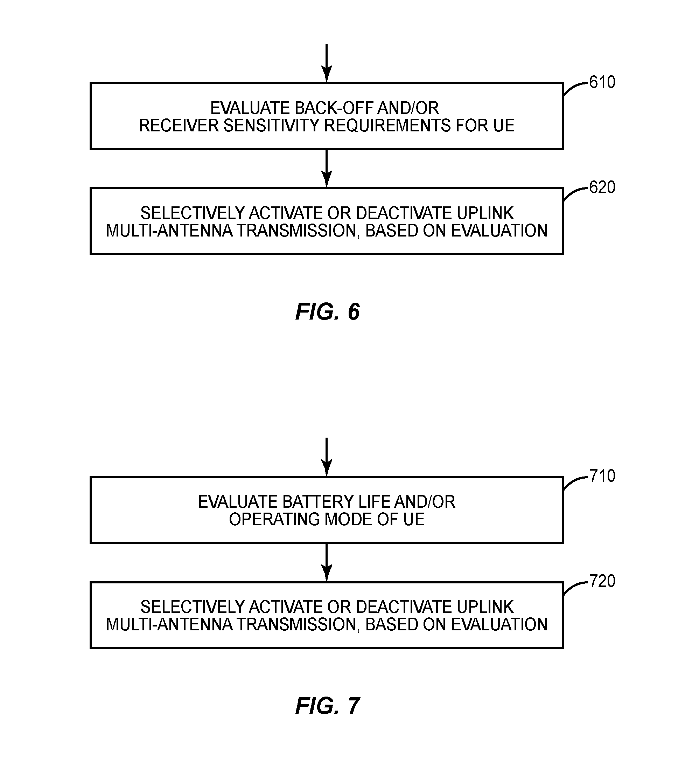

Figure 6 is a process flow diagram illustrating generally the techniques discussed above for controlling activation of uplink multi-antenna operation in a UE/mobile terminal. The illustrated process may be implemented by a network node, such as a radio network controller, a base station, a relay node, or a donor relay node, in some embodiments. In other embodiments, the illustrated process may be carried out by the mobile terminal itself.

As shown at block 610, the method begins with an evaluation of conditions and scenarios under which the UE is permitted to back-off its maximum transmission power or to operate with relaxed receiver sensitivity requirements, or both. Based on this evaluation, as shown at block 620, uplink multi-antenna operation for the UE is selectively activated or deactivated. In some cases, e.g., when the technique is carried out by a network node, the activation or deactivation of the multi-antenna operation comprises signaling the UE to activate or deactivate multi-antenna transmission. This signaling may include an indication of a reason for activating multi-antenna transmission, in some embodiments.

In some embodiments, the UE is a multi-mode terminal and the selective activating or deactivating of uplink multi-antenna operation includes activating uplink multi-antenna operation for the UE when UE power management or UE power back-off, or both, are applied by the UE. In some of these and in other embodiments, uplink multi-carrier operation is in use, and the selective activating or deactivating of uplink multi-antenna operation includes activating uplink multi-antenna operation for the UE when the UE applies power back-off or when a UE power back-off zone is approached. In some of these embodiments, an uplink configuration for the UE is evaluated to determine a maximum power reduction, MPR, applied or to be applied by the UE, and the selective activating or deactivating of uplink multi-antenna operation for the UE is based on the MPR.

In several embodiments, the selective activating or deactivating of uplink multi-antenna operation includes activating uplink multi-antenna operation for the UE when an uplink transmit channel configuration leads to a high cubic metric or other measure of non-linear performance for the UE's power amplifier. In some embodiments, the evaluation of conditions and scenarios includes evaluating an additional maximum power reduction, A-MPR, allowance signaled to the UE. In some of these and in other embodiments, the selective activating or deactivating of uplink multi-antenna operation includes deactivating multi-antenna operation for the UE in response to determining that a low data rate is being transmitted by the UE or is about to be transmitted by the UE.

In some of the above and in still other exemplary embodiments, the selective activating or deactivating of uplink multi-antenna operation includes activating uplink multi-antenna operation for the UE when the UE is simultaneously operating in cellular mode and device-to-device, D2D, mode.

In some embodiments, the UE supports more than two uplink antennas, in which case the method Figure 6 may include selectively activating a number of antennas for the UE based on the evaluation of the conditions and scenarios under which the UE is permitted to back off its maximum transmit power or to operate with relaxed receiver sensitivity requirements, or both, and indicating to the UE which specific antennas are to be used for uplink multi-antenna operation.

Figure 7 illustrates a related method for controlling activation of uplink multi-antenna operation in a UE/mobile terminal. Once again, this method may be implemented by either a network node or a mobile terminal. Further, this method may be combined with the method illustrated in Figure 6.

As shown at block 710, the illustrated method begins with an evaluation of the battery life and/or a current operating mode for the UE. The evaluation of the operating mode may include, for example, an evaluation of whether the UE is simultaneously operating in device-to-device, D2D, mode and cellular mode, or whether the UE is simultaneously operating on two different radio access technologies, or both. As shown at block 720, uplink multi-antenna transmission is selectively activated or deactivated, based on this evaluation.

For example, the illustrated method may include deactivating multi-antenna operation for the UE in response to determining that a low data rate is being transmitted by the UE or is about to be transmitted by the UE, or that the UE is transmitting at a low output power level, or both, in some embodiments.

In cases where the method illustrated in Figure 7 is carried out by a mobile terminal, the selective activation or deactivation of uplink multi-antenna operation for the mobile terminal may include signaling the network that multi-antenna transmission has been activated. This signaling includes an indication of a reason for activating multi-antenna transmission, in some aspects.

The evaluation of the battery life and/or current operating mode for the UE is based on pre-defined rules stored in the UE, in some cases. In some of these embodiments, the pre-defined rules limit activation of certain types of multi-antenna transmission to certain operating scenarios. These pre-defined rules may be based on static thresholds, in some cases, or on one or more thresholds that are signaled to the mobile terminal by a network node.

In cases where the UE supports more than two uplink antennas, the illustrated method may further include selectively activating a number of antennas for the UE, in some cases.

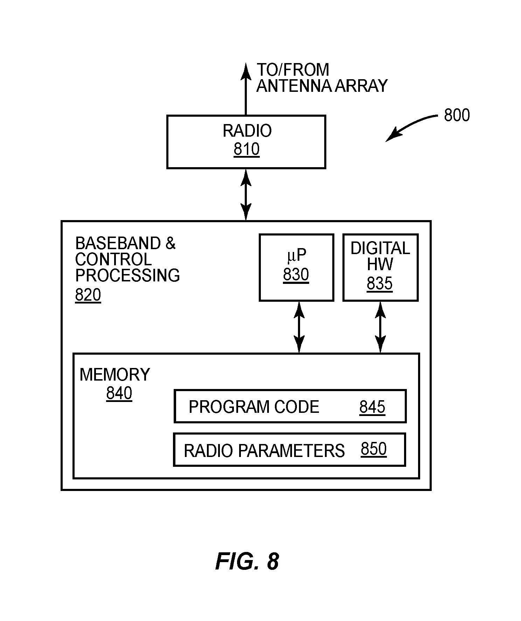

Figure 8 illustrates components in an example implementation of a mobile terminal (UE) or a base station (such as an HSPA Node B or an LTE eNodeB) configured to carry out one or more of the techniques described. Those skilled in the art will appreciate, of course, that the components used in base stations and mobile stations may differ considerably, due to different environmental, performance, and other constraints. However, the basic building blocks of both, at least as pertains to the present invention, are similar.

Of course, not every detail of the mobile station or base station design is shown in the pictured apparatus, but instead a few of the components relevant to the present techniques are pictured. The pictured apparatus 1400 includes radio circuitry 1410 and baseband & control processing circuit 1420. Radio circuitry 1410 includes receiver circuits and transmitter circuits that use known radio processing and signal processing components and techniques, typically according to one or more particular telecommunications standard such as the 3GPP standards for LTE, LTE-Advanced, HSPA, etc. Again, because the various details and engineering tradeoffs associated with the design and implementation of such circuitry are well known and are unnecessary to a full understanding of the invention, additional details are not shown here.

Baseband & control processing circuit 1420 includes one or more microprocessors or microcontrollers 1430, as well as other digital hardware 1435, which may include digital signal processors (DSPs), special-purpose digital logic, and the like. Either or both of microprocessor(s) 1430 and digital hardware 1435 may be configured to execute program code 1445, which is stored in memory 1440 along with radio parameters 1450. Once more, because the various details and engineering tradeoffs associated with the design of baseband processing circuitry for mobile devices are well known, additional details are not shown here

The program code 1445 stored in memory circuit 1440, which may comprise one or several types of memory such as read-only memory (ROM), random-access memory, cache memory, flash memory devices, optical storage devices, etc., includes program instructions for executing one or more telecommunications and/or data communications protocols, as well as instructions for carrying out one or more of the techniques described above, in several embodiments. Radio parameters 1450 include various configuration parameters as well as parameters determined from system measurements, such as channel measurements, and may include configuration data such as MPR, A-MPR, P-MPR, for example, as well as one or more predefined rules for selectively activating or deactivating uplink multi-antenna transmission based on an evaluation of operating conditions for the UE.

Accordingly, in various embodiments of the invention, a processing circuit, such as the baseband & control processing circuit 1420 of Figure 8, is configured to carry out one or more of the techniques described above for selectively activating or deactivating multi-antenna transmission techniques. As described above, this processing circuit in some embodiments is configured with appropriate program code, stored in one or more suitable memory devices, to implement one or more of these techniques. Of course, it will be appreciated that not all of the steps of these techniques are necessarily performed in a single microprocessor or even in a single module.

In some instances, one or more of the techniques described earlier may be implemented in a network node other than a base station. In that case, such as when the techniques are implemented in a radio network controller (RNC), the network node will generally not include a radio section, like the radio 1410 in transceiver 1400, but will instead include network interface circuitry that allows the network node to communicate with other elements of the network, such as eNodeBs, and/or to the core data network. However, such nodes will often include processing circuits similar in configuration to the baseband & control processing circuit 1420 of Figure 8, and may be configured similarly, e.g., with appropriate program code, to carry out one or more of the techniques described herein.

Examples of several embodiments of the present invention have been described in detail above, with reference to the attached illustrations of specific embodiments. The techniques described above can improve system performance by selectively activating uplink multi-antenna transmission in certain scenarios and selectively deactivating it in others. In some scenarios, such as multi-carrier operation, system performance is improved by avoiding or lowering the shortening of the cell coverage due to UE power backoff required in multi-carrier operation. The higher layer signaling for activation and deactivation of the ULTD feature can be exploited in various scenarios where the cell coverage can be adversely affected. The several techniques described above enable activation of ULTD to ensure better coverage in simultaneous multi-link wireless communication scenarios, e.g., simultaneous cellular link and device to device (D2D) operation by the same UE. Further, these techniques may be used to save UE battery life and reduce UE power consumption.

Specific embodiments of the inventive techniques described herein include, but are not limited to methods implemented in a network node (e.g., RNC, base station, relay, etc.) to activate multiple-antenna transmission to improve network performance under one or more of the following scenarios:
- when the UE power management or UE backoff is applied in multi-mode terminals that support, for example, simultaneous voice and data on different radio access technologies (e.g., LTE and CDMA). In these cases, required power backoffs can be as large as 6-7 dB. Transmit power savings of 1-3 dB that may be achieved with uplink transmit diversity will substantially improve the coverage, or at least result in less loss of coverage, compared to single-antenna transmission.
- when UL Multi-carrier (e.g., DC-HSUPA) is in use, when approaching the backoff zone or whenever UE applies backoff. The high power backoff due to MC-HSUPA (see, for example, Section 6.2.2A in 3GPP TS 25.101) can be circumvented at least partly by activating ULTD to avoid cell shortening due to backoff.
- when using UL transmit channel configurations (e.g., multi-code transmission, certain gain factors, etc.) that lead to a high cubic metric (or other measure of non-linear performance of the power amplifier). The use of ULTD will prevent UL coverage loss.
- when the UE battery is low. This may be regardless of whether high data rate is achieved with Tx diversity or not in the current radio environment. The UE battery life can be determined either based on received report from the UE, or may be estimated autonomously by the network, using length of activity, for example.

Other embodiments include methods implemented in a network node (e.g., RNC, base station, relay, etc.) to deactivate multiple-antenna transmission to lower UE power consumption under one or more of the following scenarios:
- when low data rate is being or is about to be transmitted (e.g., a low transmission grant or a low block size, see Figure 1). In this case, the efficiency of transmit diversity is worse than single antenna transmission.

Still other aspects include methods implemented in a UE to autonomously activate multiple-antenna transmission to improve UE battery life and power consumption under one or more of the following scenarios:
- when the UE battery is low. That is, when the UE battery is low, regardless of whether high data-rate is achieved with Tx diversity or not in the current radio environment. The UE autonomously switches on transmit diversity scheme to save battery life.
- when the UE (UE1) operates in cellular mode AND at the same time operates in device-to-device (D2D) link mode with another UE (UE2). UE1 shares its output power on two links: cellular and D2D. In such a scenario the UE may activate multi-antenna transmission on the D2D link and/or on the network link.
- when UE operates on two different RATs simultaneously, where power backoff on one
   or more RAT is applied to prevent RF exposure to human.

Other aspects include methods implemented in a UE to autonomously deactivate multiple-antenna transmission to improve power consumption under one or more of the following scenarios:
- when low data rate is being or is about to be transmitted (e.g., a low Grant, small data size, see Figure 1). In this case, the efficiency of transmit diversity is worse than single antenna transmission.

Finally, embodiments of the techniques described herein include network node apparatus and UE devices configured (e.g., using radio circuits and appropriately programmed processing devices) to carry out one or more of the above-summarized methods, including any of the variants described in detail below.

One advantage of several of the above summarized techniques is that the uplink coverage is retained or the losses in coverage are less severe. These techniques can be applicable to any RAT and to any generic uplink multiple-antenna transmission: closed-loop or open-loop transmissions, MIMO, beamforming, switched antenna transmit diversity schemes, etc.

Embodiments herein relate to a network node for use in a wireless communication system, the network node comprising means for selectively activating or deactivating uplink multi-antenna operation for the UE, characterized in that the network node further comprises:
means for evaluating (610) operating conditions to determine whether a UE is allowed
   to reduce its maximum output power or to operate with relaxed receiver sensitivity requirements, or both;
wherein the means for selectively activating or deactivating uplink multi-antenna operation for the UE is configured to selectively activate or deactivate (620) uplink multi-antenna transmission based on said evaluating.

In some embodiments the means for selectively activating or deactivating uplink multi-antenna operation for the UE is adapted to signal to the UE to activate or deactivate multi-antenna transmission.

In some embodiments the means for selectively activating or deactivating uplink multi-antenna operation for the UE is adapted to base said activating or deactivating on an evaluation of the UE's battery life.

In some embodiments the means for selectively activating or deactivating uplink multi-antenna operation for the UE is adapted to activate uplink multi-antenna operation for the UE when the UE battery life is below a threshold.

In some embodiments the UE supports simultaneous transmission on multiple radio access technologies and wherein the means for selectively activating or deactivating uplink multi-antenna operation for the UE is adapted to activate uplink multi-antenna operation for the UE when UE power management maximum power reduction, P-MPR, or UE maximum power reduction, MPR, or both, are applied by the UE, or when the applied P-MPR or MPR are above their respective thresholds.

In some embodiments uplink multi-carrier operation is in use, and wherein said the means for selectively activating or deactivating uplink multi-antenna operation for the UE is adapted to activate uplink multi-antenna operation for the UE when the UE applies maximum power reduction, MPR, or when an applied MPR is above a threshold.

In some embodiments the means for evaluating operating conditions is adapted to evaluate an uplink configuration for the UE to determine a power management maximum power reduction, P-PMR, or UE maximum power reduction, MPR, applied or to be applied by the UE, and wherein the means for selectively activating or deactivating uplink multi-antenna operation for the UE is adapted to base said activating or deactivating uplink multi-antenna operation on the MPR or P-MPR.

In some embodiments the means for selectively activating or deactivating uplink multi-antenna operation for the UE is adapted to activate uplink multi-antenna operation for the UE when an uplink transmit channel configuration leads to a high cubic metric or other measure of non-linear performance for the UE's power amplifier.

In some embodiments the means for evaluating operating conditions is adapted to evaluate an additional maximum power reduction, A-MPR, allowance signaled to the UE.

In some embodiments the means for selectively activating or deactivating uplink multi-antenna operation for the UE is adapted to activate uplink multi-antenna operation for the UE when the UE is simultaneously operating in cellular mode and device-to-device, D2D, mode.

In some embodiments the means for selectively activating or deactivating uplink multi-antenna operation for the UE is adapted to deactivate multi-antenna operation for the UE in response to determining that a data rate being transmitted by the UE or is about to be transmitted by the UE is below a threshold.

In some embodiments the means for selectively activating or deactivating uplink multi-antenna operation for the UE is adapted to deactivate multi-antenna operation for the UE in response to determining that a data rate being transmitted by the UE or about to be transmitted by the UE is below a threshold and when the UE applies MPR, or when a UE MPR zone is approached, or when MPR is below a threshold.

In some embodiments the UE supports more than two uplink antennas, wherein the means for selectively activating or deactivating uplink multi-antenna operation for the UE is further adapted to activate a particular number of antennas for the UE, based on said evaluating, and to indicate to the UE which specific antennas are to be used for uplink multi-antenna operation.

Because it is not possible, of course, to describe every conceivable combination of components or techniques, those skilled in the art will appreciate that the present invention can be implemented in other ways than those specifically set forth herein, without departing from essential characteristics of the invention. Modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation. The present embodiments are thus to be considered in all respects as illustrative and not restrictive.

## Claims

1. A method for controlling activation of uplink multi-antenna operation in a user equipment, UE, by a network node of a wireless communication system, the method comprises:
selectively activating or deactivating uplink multi-antenna operation for the UE,
wherein selectively activating or deactivating uplink multi-antenna operation for the UE comprises signaling to the UE to activate or deactivate multi-antenna transmission; **characterized in that** the method further comprises:
evaluating (610) operating conditions to determine whether the UE is allowed to
reduce its maximum output power or to operate with relaxed receiver sensitivity requirements, or both;
wherein said selectively activating or deactivating (620) uplink multi-antenna
operation for the UE is based on said evaluating.

2. The method of claim 1, wherein said selectively activating or deactivating (620) of uplink multi-antenna operation for the UE is further based on an evaluation of the UE's battery life.

3. The method of claim 2, wherein said selectively activating or deactivating (620) uplink multi-antenna operation comprises activating uplink multi-antenna operation for the UE when the UE battery life is below a threshold.

4. The method of any of claims 1-3, wherein the UE supports simultaneous transmission on multiple radio access technologies and wherein said selectively activating or deactivating (620) uplink multi-antenna operation comprises activating uplink multi-antenna operation for the UE when UE power management maximum power reduction, P-MPR, or UE maximum power reduction, MPR, or both, are applied by the UE, or when the applied P-MPR or MPR are above their respective thresholds.

5. The method of any of claims 1-3, wherein uplink multi-carrier operation is in use, and wherein said selectively activating or deactivating (620) uplink multi-antenna operation comprises activating uplink multi-antenna operation for the UE when the UE applies maximum power reduction, MPR, or when an applied MPR is above a threshold.

6. The method of claim 4 or 5, wherein said evaluating operating conditions comprises evaluating an uplink configuration for the UE to determine a power management maximum power reduction, P-PMR, or UE maximum power reduction, MPR, applied or to be applied by the UE, wherein said selectively activating or deactivating (620) uplink multi-antenna operation for the UE is based on the MPR or P-MPR.

7. The method of any of claims 1-6, wherein said selectively activating or deactivating (620) uplink multi-antenna operation comprises activating uplink multi-antenna operation for the UE when an uplink transmit channel configuration leads to a high cubic metric or other measure of non-linear performance for the UE's power amplifier.

8. The method of any of claims 1-7, wherein said evaluating operating conditions comprises evaluating an additional maximum power reduction, A-MPR, allowance signaled to the UE.

9. The method of any of claims 1-3, wherein said selectively activating or deactivating (620) uplink multi-antenna operation comprises activating uplink multi-antenna operation for the UE when the UE is simultaneously operating in cellular mode and device-to-device, D2D, mode.

10. The method of any of claims 1-9, the method further comprising deactivating multi-antenna operation for the UE in response to determining that a data rate being transmitted by the UE or is about to be transmitted by the UE is below a threshold.

11. The method of any of claims 1-10, the method further comprising activating multi-antenna operation for the UE in response to determining that a data rate being transmitted by the UE or about to be transmitted by the UE is below a threshold and when the UE applies MPR, or when a UE MPR zone is approached, or when MPR is below a threshold.

12. The method of any of claims 1-11, wherein the UE supports more than two uplink antennas, the method further comprising selectively activating a number of antennas for the UE based on said evaluating, and indicating to the UE which specific antennas are to be used for uplink multi-antenna operation.

13. A network node for use in a wireless communication system, the network node comprising a processing circuit (1420) adapted to selectively activate or deactivate uplink multi-antenna operation for a User Equipment, UE, and to signal to the UE to activate or deactivate multi-antenna transmission **characterized in that** the processing circuit (1420) is further adapted to:
evaluate operating conditions to determine whether the UE is allowed to back-off its maximum output power or to operate with relaxed receiver sensitivity requirements, or both; and
selectively activate or deactivate uplink multi-antenna operation for the UE based on said evaluating,

14. The network node of claim 13, wherein the network node is one of:
a radio network controller;
a base station;
a relay node; and
a donor relay node.

## Patentansprüche

1. Verfahren zur Steuerung der Aktivierung von Mehrantennen-Aufwärtsbetrieb in einer Benutzereinrichtung, UE, durch einen Netzkoten eines drahtlosen Kommunikationssystems, wobei das Verfahren umfasst:
selektives Aktivieren oder Deaktivieren des Mehrantennen-Aufwärtsbetriebs für die UE, wobei das selektive Aktivieren oder Deaktivieren des Mehrantennen-Aufwärtsbetriebs für die UE ein Signalisieren an die UE umfasst, Mehrantennen-Übertragung zu aktivieren oder zu deaktivieren; **dadurch gekennzeichnet, dass** das Verfahren ferner umfasst:
Bewerten (610) von Betriebsbedingungen, um zu bestimmen, ob die UE ihre maximale Ausgangsleistung reduzieren oder bei gelockerten Empfängerempfindlichkeitsanforderungen arbeiten darf oder beides;
wobei das selektive Aktivieren oder Deaktivieren (620) des Mehrantennen-Aufwärtsbetriebs für die UE auf dem Bewerten basiert.

2. Verfahren nach Anspruch 1, wobei das selektive Aktivieren oder Deaktivieren (620) des Mehrantennen-Aufwärtsbetriebs für die UE ferner auf einer Bewertung der Lebensdauer der Batterie der UE basiert.

3. Verfahren nach Anspruch 2, wobei das selektive Aktivieren oder Deaktivieren (620) des Mehrantennen-Aufwärtsbetriebs ein Aktivieren des Mehrantennen-Aufwärtsbetriebs für die UE umfasst, wenn die UE-Batterielebensdauer unter einer Schwelle ist.

4. Verfahren nach einem der Ansprüche 1 bis 3, wobei die UE gleichzeitige Übertragung auf mehreren Funkzugangstechnologien unterstützt, und wobei das selektive Aktivieren oder Deaktivieren (620) des Mehrantennen-Aufwärtsbetriebs ein Aktivieren des Mehrantennen-Aufwärtsbetriebs für die UE umfasst, wenn maximale UE-Leistungsverwaltungs-Leistungsreduktion, P-MPR, oder maximale UE-Leistungsreduktion, MPR, oder beides durch die UE angewendet wird, oder wenn die angewendete P-MPR oder MPR über ihren jeweiligen Schwellen sind.

5. Verfahren nach einem der Ansprüche 1 bis 3, wobei Mehrträger-Aufwärtsbetrieb in Verwendung ist, und wobei das selektive Aktivieren oder Deaktivieren (620) des Mehrantennen-Aufwärtsbetriebs ein Aktivieren des Mehrantennen-Aufwärtsbetriebs für die UE umfasst, wenn die UE maximale Leistungsreduktion, MPR, anwendet, oder wenn eine angewendete MPR über einer Schwelle ist.

6. Verfahren nach Anspruch 4 oder 5, wobei das Bewerten von Betriebsbedingungen ein Bewerten einer Aufwärtskonfiguration für die UE umfasst, um eine maximale Leistungsverwaltungs-Leistungsreduktion, P-MPR, oder maximale UE-Leistungsreduktion, MPR, zu bestimmen, die durch die UE angewendet wird oder angewendet werden soll, wobei das selektive Aktivieren oder Deaktivieren (620) des Mehrantennen-Aufwärtsbetriebs für die UE auf der MPR oder P-MPR basiert.

7. Verfahren nach einem der Ansprüche 1 bis 6, wobei das selektive Aktivieren oder Deaktivieren (620) des Mehrantennen-Aufwärtsbetriebs ein Aktivieren des Mehrantennen-Aufwärtsbetriebs für die UE umfasst, wenn eine Aufwärtssendekanalkonfiguration zu einem hohen Kubikmeter- oder anderen Maß von nichtlinearem Verhalten für den Leistungsverstärker der UE führt.

8. Verfahren nach einem der Ansprüche 1 bis 7, wobei das Bewerten von Betriebsbedingungen ein Bewerten einer an die UE signalisierten Erlaubnis für zusätzliche maximale Leistungsreduktion, A-MPR, umfasst.

9. Verfahren nach einem der Ansprüche 1 bis 3, wobei das selektive Aktivieren oder Deaktivieren (620) des Mehrantennen-Aufwärtsbetriebs ein Aktivieren des Mehrantennen-Aufwärtsbetriebs für die UE umfasst, wenn die UE gleichzeitig im zellularen Modus und Gerät-zu-Gerät, D2D,-Modus arbeitet.

10. Verfahren nach einem der Ansprüche 1 bis 9, wobei das Verfahren ferner ein Deaktivieren des Mehrantennen-Aufwärtsbetriebs für die UE in Reaktion auf ein Bestimmen umfasst, dass eine Datenrate, die von der UE gesendet wird oder die zu senden die UE im Begriff steht, unter einer Schwelle ist.

11. Verfahren nach einem der Ansprüche 1 bis 10, wobei das Verfahren ferner ein Aktivieren des Mehrantennen-Aufwärtsbetriebs für die UE in Reaktion auf ein Bestimmen umfasst, dass eine Datenrate, die von der UE gesendet wird oder die zu senden die UE im Begriff steht, unter einer Schwelle ist, und wenn die UE MPR anwendet, oder wenn einer UE-MPR-Zone nahe gekommen wird, oder wenn MPR unter einer Schwelle ist.

12. Verfahren nach einem der Ansprüche 1 bis 11, wobei die UE mehr als zwei Aufwärtsantennen unterstützt, wobei das Verfahren ferner ein selektives Aktivieren einer Anzahl von Antennen für die UE basierend auf dem Bewerten und ein Hinweisen der UE darauf, welche spezifischen Antennen für Mehrantennen-Aufwärtsbetrieb verwendet werden sollen, umfasst.

13. Netzknoten zur Verwendung in einem drahtlosen Kommunikationssystem, wobei der Netzknoten eine Verarbeitungsschaltung (1420) umfasst, die so ausgelegt ist, dass sie einen Mehrantennen-Aufwärtsbetrieb für eine Benutzereinrichtung, UE, selektiv aktiviert und deaktiviert und der UE signalisiert, Mehrantennen-Übertragung zu aktivieren oder zu deaktivieren, **dadurch gekennzeichnet, dass** die Verarbeitungsschaltung (1420) ferner ausgelegt ist zum:
Bewerten von Betriebsbedingungen, um zu bestimmen, ob die UE ihre maximale Ausgangsleistung zurücksetzen oder bei gelockerten Empfängerempfindlichkeitsanforderungen arbeiten darf oder beides;
selektiven Aktivieren oder Deaktivieren des Mehrantennen-Aufwärtsbetriebs für die UE basierend auf dem Bewerten.

14. Netzknoten nach Anspruch 13, wobei der Netzknoten eines von Folgendem ist:
einer Funknetzsteuerung;
einer Basisstation;
einem Relaisknoten; und
einem Donator-Relaisknoten.

## Revendications

1. Procédé de commande d'activation de fonctionnement multi antenne de liaison montante dans un équipement d'utilisateur, UE, par un noeud de réseau d'un système de communication sans fil, le procédé comprenant de :
activer ou désactiver sélectivement un fonctionnement multi antenne de liaison montante pour l'UE, dans lequel activer ou désactiver sélectivement un fonctionnement multi antenne de liaison montante pour l'UE comprend de signaler à l'UE d'activer ou désactiver une transmission multi antenne ;
**caractérisé en ce que** le procédé comprend en outre de :
évaluer (610) des conditions de fonctionnement pour déterminer si l'UE est autorisé à réduire sa puissance de sortie maximale ou pour fonctionner avec des exigences de sensibilité de récepteur plus souples, ou les deux ;
dans lequel ladite activation ou désactivation (620) sélective du fonctionnement multi antenne de liaison montante pour l'UE est basée sur ladite évaluation.

2. Procédé selon la revendication 1, dans lequel ladite activation ou désactivation sélective (620) du fonctionnement multi antenne de liaison montante pour l'UE est en outre basée sur l'évaluation de la durée de vie de la batterie de l'UE.

3. Procédé selon la revendication 2, dans lequel ladite activation ou désactivation sélective (620) du fonctionnement multi antenne de liaison montante comprend d'activer un fonctionnement multi antenne de liaison montante pour l'UE quand la durée de vie de la batterie de l'UE est au-dessous d'un seuil.

4. Procédé selon une quelconque des revendications 1-3, dans lequel l'UE supporte une transmission simultanée sur des technologies d'accès radio multiples et dans lequel ladite activation ou désactivation sélective (620) du fonctionnement multi antenne de liaison montante comprend d'activer le fonctionnement multi antenne de liaison montante pour l'UE quand une réduction de puissance maximale de gestion de puissance d'UE, P-MPR, ou réduction de puissance maximale d'UE, MPR, ou les deux, sont appliquées par l'UE, ou quand le P-MPR ou MPR appliqué sont au-dessus de leurs seuils respectifs.

5. Procédé selon une quelconque des revendications 1-3, dans lequel un fonctionnement multi porteuse de liaison montante est utilisé, et dans lequel l'activation ou la désactivation sélective (620) du fonctionnement multi antenne de liaison montante comprend d'activer le fonctionnement multi antenne de liaison montante pour l'UE quand l'UE appliquait une réduction de puissance maximale, MPR, ou quand une MPR appliquée est au-dessus d'un seuil.

6. Procédé selon la revendication 4 ou 5, dans lequel l'évaluation des conditions de fonctionnement comprend d'évaluer une configuration de liaison montante pour l'UE pour déterminer une réduction de puissance maximale de gestion de puissance, P-PMR, ou une réduction de puissance maximale d'UE, MPR, appliquée ou à appliquer par l'UE, dans lequel ladite activation ou désactivation sélective (620) du fonctionnement multi antenne de liaison montante pour l'UE est basé sur la MPR ou P-MPR.

7. Procédé selon une quelconque des revendications 1-6, dans lequel l'activation ou la désactivation sélective (620) du fonctionnement multi antenne de liaison montante comprend d'activer un fonctionnement multi antenne de liaison montante pour l'UE quand une configuration de canal d'émission en liaison montante entraîne une métrique cubique élevée ou une autre mesure de performance non linéaire pour l'amplificateur de puissance d'UE.

8. Procédé selon une quelconque des revendications 1-7, dans lequel l'évaluation des conditions de fonctionnement comprend d'évaluer une autorisation de réduction de puissance maximale additionnelle, A-MPR, signalée à l'UE.

9. Procédé selon une quelconque des revendications 1-3, dans lequel l'activation ou la désactivation sélective (620) du fonctionnement multi antenne de liaison montante comprend d'activer un fonctionnement multi antenne de liaison montante pour l'UE quand l'UE fonctionne simultanément en mode cellulaire et en mode de dispositif à dispositif, D2D.

10. Procédé selon une quelconque des revendications 1-9, le procédé comprenant en outre de désactiver le fonctionnement multi antenne pour l'UE en réponse à la détermination qu'un débit de données étant transmis par l'UE ou étant sur le point d'être transmis par l'UE est au-dessous d'un seuil.

11. Procédé selon une quelconque des revendications 1-10, le procédé comprenant en outre d'activer le fonctionnement multi antenne pour l'UE en réponse à la détermination qu'un débit de données étant transmis par l'UE ou étant sur le point d'être transmis par l'UE est au-dessous d'un seuil et quand l'UE applique MPR ou quand un UE s'approche d'une zone MPR, ou quand l'UE est au-dessous d'un seuil.

12. Procédé selon une quelconque des revendications 1-11, dans lequel l'UE supporte plus de deux antennes de liaison montante, le procédé comprenant en outre d'activer sélectivement une pluralité d'antennes pour l'UE sur la base de ladite évaluation et d' 'indiquer à l'UE quelles antennes spécifiques doivent être utilisées pour un fonctionnement multi antenne de liaison montante.

13. Noeud de réseau à utiliser dans un système de communication sans fil, le noeud de réseau comprenant un circuit de traitement (1420) adapté pour activer ou désactiver sélectivement un fonctionnement multi antenne de liaison montante pour un équipement d'utilisateur, UE, et signaler à l'UE d'activer ou désactiver une transmission multi antenne, **caractérise en ce que** le circuit de traitement (1420) est en outre adapté pour :
évaluer les conditions de fonctionnement pour déterminer si l'UE est autorisé à réduire sa puissance de sortie maximale ou à fonctionner avec des exigences de sensibilité de récepteur plus souples ou les deux ; et
activer ou désactiver sélectivement un fonctionnement multi antenne de liaison montante pour l'UE sur la base de ladite évaluation.

14. Noeud de réseau selon la revendication 13, dans lequel le noeud de réseau est un de :
un contrôleur de réseau radio ;
une station de base ;
un noeud de relais ; et
un noeud de relais doneur.
